# EUROPEAN PATENT APPLICATION

(11) **EP 4 398 183 A1**
(43) Date of publication of application: **10.07.2024**
(21) Application number: 22862694.1
(22) Date of filing: 09.05.2022
(51) Int. Cl.: G06T 3/40

(54) **IMAGE STITCHING METHOD AND SYSTEM BASED ON MULTIPLE UNMANNED AERIAL VEHICLES**

(30) Priority: 30.08.2021 CN 202111006658
(71) Applicant: Chengdu Jouav Automation Tech Co., Ltd., Chengdu, Sichuan 610095 (CN)
(72) Inventor: YUAN, Rui, Chengdu, Sichuan 610095 (CN); ZHOU, Dan, Chengdu, Sichuan 610095 (CN); LEI, Ming, Chengdu, Sichuan 610095 (CN); LIU, Hang, Chengdu, Sichuan 610095 (CN)
(74) Representative: JD&P Patent Attorneys Joanna Dargiewicz & Partners
(86) International application number: PCT/CN2022/091638
(87) International publication number: WO 2023/029551

(57) **Abstract**

The present disclosure provides an image stitching method and an image stitching system based on UAVs. The image stitching method includes: obtaining a plurality of groups of image compression bitstreams and a plurality of groups of metadata; encapsulating the plurality of groups of metadata into predefined fields of the image compression bitstreams frame by frame in a time synchronization manner, and generating a plurality of full-motion video bitstreams including the metadata; transmitting the plurality of full-motion video bitstreams to a receiving end through communication links; parsing each full-motion video bitstream into image frames and the corresponding metadata, and calculating an overlapping relationship between the image frames in accordance with the metadata; and generating a stitched image in accordance with the image frames and the overlapping relationship. The full-motion video bitstream including the metadata and the video data is created, and the accurate information, e.g., a geographical position and a flight condition of the UAV, is provided in accordance with the metadata, so it is able to improve a stitching effect. In addition, the metadata strictly synchronizes with the image frame, so it is able to accurately calculate the overlapping relationship between the image frames.

## Description

This application claims a priority of the Chinese patent application No.202111006658.X filed on August 30, 2021 and entitled "image stitching method and system based on multiple unmanned aerial vehicles", which is incorporated herein by reference in its entirety.

### TECHNICAL FIELD

The present disclosure relates to the field of an imaging technology of an unmanned aerial vehicle, in particular to an image stitching method and an image stitching system based on multiple Unmanned Aerial Vehicles (UAVs).

### BACKGROUND

Along with the development of the UAV technology, various UAVs have been applied in different industries for different flight tasks. Different from a common consumer-grade UAV, an industrial-grade UAV is capable of completing more tasks, e.g., regional supervision, patrolling, mapping, and investigation and collection of evidences, in more industries, e.g., emergency rescue, disaster monitoring, traffic monitoring, border patrolling and regional monitoring. A video collection device, e.g., a single-camera photoelectric pod or a multi-camera panoramic device, is mounted on the UAV, and video data is transmitted to a ground station by means of various data transmission links, so as to determine a condition in a flight region in real time or obtain information through an algorithm, e.g., an Artificial Intelligence (AI) algorithm.

In a conventional UAV data transmission process, usually merely video data or metadata is transmitted. In actual use, e.g., in a real-time task such as patrolling, in the case of a single data type, it is difficult to complete more tasks, e.g., monitoring a flight state in real time, or processing information in accordance with the video data and the metadata, including creating a panoramic image and positioning an object. For a UAV video or image stitching technology, a two-dimensional (2D) image about the flight region is recreated by the ground station using an incremental algorithm in accordance with sequence images transmitted through a UAV data line in real time. Identically, through a post-treatment method, the 2D image about the flight region is recreated using a global optimization algorithm, and then orthorectification is performed in accordance with a recreated digital surface model.

In a conventional image stitching method, motion between images is calculated in accordance with the matching of image feature points, the images are stitched incrementally using a homography matrix of an image registration model, and then the above steps are repeated so as to obtain a globally stitched image. However, in this method, such a problem as drift occurs due to accumulated errors. A calculation result is not constrained using a plurality of images, so a resultant error is very big. In addition, when video images or multi-channel video images are used, it is impossible to process dense video-streaming images, and the efficiency is low due to repeated calculation. In another conventional image stitching method, the motion between the images is calculated in accordance with the matching of the image feature points, a scene structure is restored through triangulation, a camera pose is calculated using a 2D or three-dimensional (3D) algorithm, the images are stitched incrementally, and then the above steps are repeated, so as to obtain the globally stitched image. However, in this method, such a problem as drift also occurs due to accumulated errors. In addition, when the scene structure is recreated unsuccessfully, the registration is performed unsuccessfully or the movement of the UVA changes greatly, data loss easily occurs, and it is necessary to stitch the images again. When the video images or multi-channel video images are used, it is impossible to process dense video-streaming images, and the efficiency is also low due to the repeated calculation. In yet another conventional image stitching method, video images are received from multiple UAVs in real time, conversion is performed on the images in advance through positioning an object, and then the images are stitched with respect to an overlapping region, so as to obtain the stitched image. However, in this method, the images are stitched through matching the image feature points, and it is necessary to perform conversion on the images in advance in accordance with information about the object, so the stitching quality easily decreases and the image matching is not accurate after the conversion. Moreover, when the video images from the multiple UAVs are processed, the images are stitched merely with respect to the overlapping region, rather than flight regions not overlapping with each other.

In a word, the conventional image stitching method based on multiple UAVs has such a problem as insufficient stitching quality.

### SUMMARY

An object of the present disclosure is to provide an image stitching method and an image stitching system based on multiple UAVs, so as to solve the problem in the related art where the conventional image stitching method based on multiple UAVs has such a problem as insufficient stitching quality.

In one aspect, the present disclosure provides in some embodiments an image stitching method based on multiple UAVs, including: obtaining a plurality of groups of image compression bitstreams and a plurality of groups of metadata; encapsulating the plurality of groups of metadata into predefined fields of the image compression bitstreams frame by frame in a time synchronization manner, and generating a plurality of full-motion video bitstreams including the metadata; transmitting the plurality of full-motion video bitstreams to a receiving end through communication links; parsing each full-motion video bitstream into image frames and the corresponding metadata, and calculating an overlapping relationship between the image frames in accordance with the metadata; and generating a stitched image in accordance with the image frames and the overlapping relationship.

In a possible embodiment of the present disclosure, the parsing each full-motion video bitstream into the image frames and the corresponding metadata and calculating the overlapping relationship between the image frames in accordance with the metadata includes: parsing geographical location information included in the metadata and temporally synchronizing with the image frames each time the plurality of full-motion video bitstreams is parsed into image frames temporally synchronizing with each other, calculating geographical range overlapping data between different image frames, and generating the overlapping relationship; or when the plurality of full-motion video bitstreams is parsed into a plurality of image frames, parsing geographical location information included in the metadata and temporally synchronizing with the image frames, calculating geographical range overlapping data between the image frames temporally synchronizing with each other, and generating the overlapping relationship.

In a possible embodiment of the present disclosure, the parsing each full-motion video bitstream into the image frames and the corresponding metadata and calculating the overlapping relationship between the image frames in accordance with the metadata further includes, when the plurality of full-motion video bitstreams is parsed into a plurality of image frames, parsing geographical location information included in the metadata and temporally synchronizing with the image frames, calculating geographical range overlapping data between the image frames in a same full-motion video bitstream, and generating the overlapping relationship.

In a possible embodiment of the present disclosure, the generating the stitched image in accordance with the plurality of image frames and the overlapping relationship includes performing coordinate system unification on the plurality of image frames, and generating the stitched image in accordance with the overlapping relationship.

In a possible embodiment of the present disclosure, the obtaining the plurality of groups of image compression bitstreams and the plurality of groups of metadata includes: outputting a first control signal for collecting the image compression bitstreams and a second control signal for collecting the metadata through a same reference clock circuit, the first control signal and the second control signal having a same reference clock; and obtaining the plurality of groups of image compression bitstreams and the plurality of groups of metadata including an absolute time in accordance with the first control signal and the second control signal.

In a possible embodiment of the present disclosure, the metadata at least includes Global Navigation Satellite System (GNSS) positioning data.

In a possible embodiment of the present disclosure, the image stitching method further includes subjecting the image frame to visualization treatment. The visualization treatment includes: creating a corresponding first layer in accordance with each full-motion video bitstream; when the overlapping relationship indicates that the image frames do not overlap with each other, generating the stitched image through updating the image frames participating in the calculation of the overlapping relationship on the first layer corresponding to the full-motion video bitstream to which the image frames belong; and when the overlapping relationship indicates that the image frames overlap with each other, invoking the first layer corresponding to the full-motion video bitstream to which the image frames participating in the calculation of the overlapping relationship belongs as a second layer, performing orthorectification and photogrammetric coordinate system unification on the plurality of image frames, generating the stitched image in accordance with the overlapping relationship, and updating the stitched image on the second layer.

In a possible embodiment of the present disclosure, an updating frequency is configured to be the same as a frame rate of the full-motion video bitstream.

In another aspect, the present disclosure provides in some embodiments an image stitching system based on multiple UAVs, including: a transmitting end configured to obtain a plurality of groups of image compression bitstreams and a plurality of groups of metadata, encapsulate the plurality of groups of metadata into predefined fields of the image compression bitstreams frame by frame in a time synchronization manner, generate a plurality of full-motion video bitstreams including the metadata, and transmit the plurality of full-motion video bitstreams to a receiving end through communication links; and the receiving end configured to parse each full-motion video bitstream into image frames and the corresponding metadata, calculate an overlapping relationship between the image frames in accordance with the metadata, and generate a stitched image in accordance with the image frames and the overlapping relationship.

In a possible embodiment of the present disclosure, the receiving end includes: a determination unit configured to select a plurality of pairs of image frames to be stitched; a positioning unit configured to calculate the overlapping relationship between the image frames; a stitching unit configured to generate the stitched image; and a display unit configured to display the stitched image.

According to the image stitching method based on the multiple UAVs in the embodiments of the present disclosure, the full-motion video bitstream including the metadata of the UAV and the video data is created, and the accurate information, e.g., geographical positioning and a flight condition of the UAV, is provided in accordance with the metadata, so it is able to improve a stitching effect, and prevent the occurrence of drift due to accumulated errors in a conventional image stitching method. In addition, the metadata strictly synchronizes with the image frame, so it is able to accurately parse a field of view of the image frame corresponding to the metadata and coordinates of a center of the field of view in accordance with the metadata, and calculate the overlapping relationship between the image frames accurately, thereby to prevent the occurrence of inaccurate stitching caused by data asynchronization.

### BRIEF DESCRIPTION OF THE DRAWINGS

Fig. 1 is a flow chart of an image stitching method based on multiple UAVs according to one embodiment of the present disclosure; and
Fig. 2 is a schematic view showing an image stitching system based on multiple UAVs according to one embodiment of the present disclosure.

### DETAILED DESCRIPTION

In order to make the obj ects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

### First Embodiment

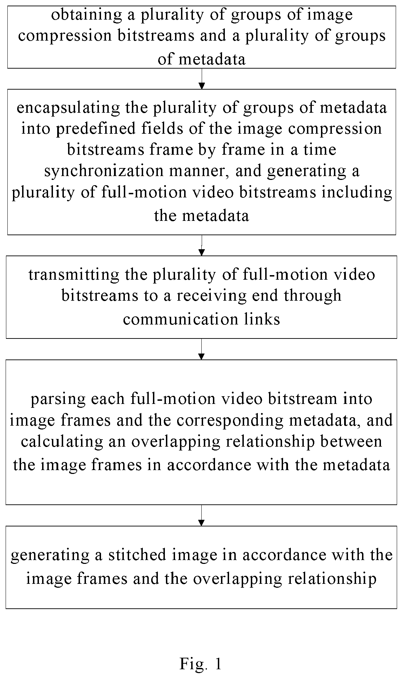

As shown in Fig. 1, the present disclosure provides in this embodiment an image stitching method based on multiple UAVs, which includes: obtaining a plurality of groups of image compression bitstreams and a plurality of groups of metadata; encapsulating the plurality of groups of metadata into predefined fields of the image compression bitstreams frame by frame in a time synchronization manner, and generating a plurality of full-motion video bitstreams including the metadata; transmitting the plurality of full-motion video bitstreams to a receiving end through communication links; parsing each full-motion video bitstream into image frames and the corresponding metadata, and calculating an overlapping relationship between the image frames in accordance with the metadata; and generating a stitched image in accordance with the image frames and the overlapping relationship. The metadata includes GNSS data, height data, field angle data and flight pose data. In the case that a communication transport protocol is H264 or H265, the predefined field is a Supplemental Enhancement Information (SEI) field, and in the case that the communication transport protocol is an MPEG2 Transport Stream (TS) encapsulation protocol, the predefined field is a custom field. To be specific, the type of the metadata depends on a type of a mobile device with a sensor. For example, when the mobile device is a boat, the metadata includes device state data, e.g., GNSS data, wind direction or course. When the mobile device is an aircraft, the metadata at least includes aircraft Position and Orientation System (POS) data, aircraft state, load sensor type, pod POS data, pod state and image processing board data. When a sensor is a fixed camera, the metadata includes positioning, viewing direction, pitch angle, field angle, height of pole, channel, transmission bandwidth, device Identity Document (ID), etc. The aircraft POS data at least includes yaw angle, pitch angle, roll angle, longitude and latitude, height, distance from a starting point, azimuth relative to the starting point, and velocity. The pod POS data at least includes horizontal field angle in visible light, vertical field angle in visible light, horizontal field angle in infrared light, vertical field angle in infrared light, camera focal length, course Euler angle of the pod, pitch Euler angle of the pod, course frame angle, pitch frame angle, roll frame angle, longitude, latitude and height of an object, velocity of the object, velocity azimuth of the object, and estimated distance between the object and the aircraft.

The parsing each full-motion video bitstream into the image frames and the corresponding metadata and calculating the overlapping relationship between the image frames in accordance with the metadata includes: parsing geographical location information included in the metadata and temporally synchronizing with the image frames each time the plurality of full-motion video bitstreams is parsed into image frames temporally synchronizing with each other, calculating geographical range overlapping data between different image frames, and generating the overlapping relationship; or when the plurality of full-motion video bitstreams is parsed into a plurality of image frames, parsing geographical location information included in the metadata and temporally synchronizing with the image frames, calculating geographical range overlapping data between the image frames temporally synchronizing with each other, and generating the overlapping relationship. The calculating the geographical range overlapping data between the image frames includes calculating a field of view of the image frame corresponding to the metadata and coordinates of a center of the field of view in accordance with the geographical position information, a field angle, and a pitch yaw angle in the metadata to obtain geographical range data about the image frame, calculating an overlapping region between the geographical range data of the image frames, and generating the geographical range overlapping data.

The parsing each full-motion video bitstream into the image frames and the corresponding metadata and calculating the overlapping relationship between the image frames in accordance with the metadata further includes, when the plurality of full-motion video bitstreams is parsed into a plurality of image frames, parsing geographical location information included in the metadata and temporally synchronizing with the image frames, calculating geographical range overlapping data between the image frames in a same full-motion video bitstream, and generating the overlapping relationship.

The generating the stitched image in accordance with the plurality of image frames and the overlapping relationship includes performing coordinate system unification on the plurality of image frames, and generating the stitched image in accordance with the overlapping relationship. Spatial resolutions of the image frames collected by different UAVs may be different due to different camera parameters and different heights of the UAVs, so after orthorectification and photogrammetric coordinate system unification on the image frames, spatial resolution unification is further performed on the image frames, so as to improve the stitching effect. When the overlapping relationship indicates that there is a large overlapping region, the calculation of an image motion change is performed on the image frames participating in the calculation of the overlapping relationship, and then the image stitching is performed.

In addition, after the generation of the stitched image, global optimization is performed in accordance with an existing stitching result and metadata of the images through, but not limited to, geographical registration and camera pose optimization, so as to improve the stitching effect.

The image stitching method further includes subjecting the image frame to visualization treatment. The visualization treatment includes: creating a corresponding first layer in accordance with each full-motion video bitstream; when the overlapping relationship indicates that the image frames do not overlap with each other, generating the stitched image through updating the image frames participating in the calculation of the overlapping relationship on the first layer corresponding to the full-motion video bitstream to which the image frames belong; and when the overlapping relationship indicates that the image frames overlap with each other, invoking the first layer corresponding to the full-motion video bitstream to which the image frames participating in the calculation of the overlapping relationship belongs as a second layer, performing orthorectification and photogrammetric coordinate system unification on the plurality of image frames, generating the stitched image in accordance with the overlapping relationship, and updating the stitched image on the second layer. A refreshing frequency is configured to be the same as a frame rate of the full-motion video bitstream. For example, when the frame rate of the full-motion video bitstream is 50 frames per second, the updating frequency is 25 frames per second. In this way, it is unnecessary to visually present the stitched image in real time, so as to reduce a computation load.

In order to meet the requirement in the other application scenarios, the present disclosure further provides in this embodiment an image stitching method, which includes: when a plurality of full-motion video bitstreams is parsed into image frames temporally synchronizing with each other, parsing geographical location information included in metadata and temporally synchronizing with the image frames, calculating geographical range overlapping data between different image frames, and generating a first overlapping relationship; when the first overlapping relationship indicates that the image frames overlap with each other, invoking a first layer corresponding to the full-motion video bitstream to which the image frames participating in the calculation of the overlapping relationship belongs as a second layer, performing orthorectification and photogrammetric coordinate system unification on the plurality of image frames, generating a stitched image in accordance with the first overlapping relationship, and updating the stitched image on the second layer; and when the first overlapping relationship indicates that the image frames do not overlap with each other, generating the stitched image through updating the image frames participating in the calculation of the first overlapping relationship on the first layer corresponding to the full-motion video bitstream to which the image frames belong. The updating the image frames participating in the calculation of the first overlapping relationship on the first layer corresponding to the full-motion video bitstream to which the image frames belong includes calculating geographical range overlapping data between a current image frame and a previous image frame in the full-motion video bitstream to generate a second overlapping relationship, performing orthorectification and photogrammetric coordinate system unification on the current image frame and the previous image frame, generating the stitched image in accordance with the second overlapping relationship, and updating the stitched image on the first layer.

The obtaining the plurality of groups of image compression bitstreams and the plurality of groups of metadata includes: outputting a first control signal for collecting the image compression bitstreams and a second control signal for collecting the metadata through a same reference clock circuit, the first control signal and the second control signal having a same reference clock; and obtaining the plurality of groups of image compression bitstreams and the plurality of groups of metadata including an absolute time in accordance with the first control signal and the second control signal. In this embodiment of the present disclosure, reference clock signals from a same reference clock circuit are taken as the first control signal and the second control signal, and timestamps in the image compression bitstream and the metadata are set with reference to a same clock source, so the timestamps are considered as absolute times relative to each other in a system including the same clock source. The generating the first control signal and the second control signal includes, upon the receipt of an instruction from a ground station, outputting, by a load processing sub-unit of the UAV, the first control signal and the second control signal through a same reference clock circuit.

The image stitching method further includes: when the full-motion video bitstream is transmitted by a transmitting end to the receiving end through the communication link and the communication link includes at least one transmission node, parsing the full-motion video bitstream into the plurality of image frames and the metadata temporally synchronizing with the image frames through the transmission node; modifying the metadata, encapsulating the modified metadata into the predefined field of the image frames in a time-synchronization manner, and generating the full-motion video bitstream including the modified metadata; and transmitting the full-motion video bitstream including the modified metadata to the receiving end continuously through the communication link. Through synchronously encapsulating the metadata into the image compression bitstream, when there is the transmission node in the communication link, it is able for the transmission node to extract a pure image frame from the full-motion video bitstream and extract the metadata synchronizing with the image frame from the predefined field of the full-motion video bitstream without any damage to the image compression bitstream. In this way, the transmission node is used in various scenarios through the transmission node. In addition, the transmission node modifies the metadata, encapsulates the metadata and the image frames again, and transmits them to the receiving end. Hence, it is able to modify the full-motion video stream during the transmission in the communication link, and improve the diversity of the application scenarios.

According to the image stitching method in the embodiments of the present disclosure, the full-motion video bitstream including the metadata and the video data of the UAV is created, and the accurate information, e.g., geographical positioning and a flight condition of the UAV, is provided in accordance with the metadata, so it is able to improve a stitching effect, and prevent the occurrence of drift due to accumulated errors in a conventional image stitching method. In addition, the metadata strictly synchronizes with the image frame, so it is able to accurately parse a field of view of the image frame corresponding to the metadata and coordinates of a center of the field of view in accordance with the metadata, and calculate the overlapping relationship between the image frames accurately, thereby to prevent the occurrence of inaccurate stitching caused by data asynchronization.

### Second Embodiment

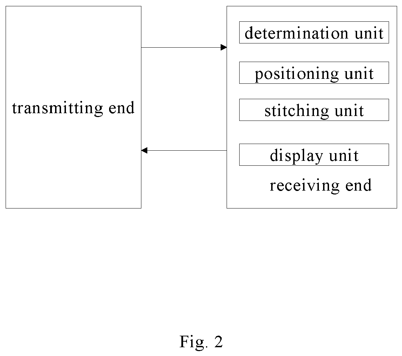

As shown in Fig. 2, the present disclosure further provides in this embodiment an image stitching system based on multiple UAVs, including: a transmitting end configured to obtain a plurality of groups of image compression bitstreams and a plurality of groups of metadata, encapsulate the plurality of groups of metadata into predefined fields of the image compression bitstreams frame by frame in a time synchronization manner, generate a plurality of full-motion video bitstreams including the metadata, and transmit the plurality of full-motion video bitstreams to a receiving end through communication links; and the receiving end configured to parse each full-motion video bitstream into image frames and the corresponding metadata, calculate an overlapping relationship between the image frames in accordance with the metadata, and generate a stitched image in accordance with the image frames and the overlapping relationship. The transmitting end is a UAV, and the receiving end is a ground station or any other backend data processing unit. In the case that the receiving end is the other backend data processing unit, the ground station is considered as an intermediate transmission node for forwarding data.

The receiving end includes: a determination unit configured to select a plurality of pairs of image frames to be stitched; a positioning unit configured to calculate the overlapping relationship between the image frames; a stitching unit configured to generate the stitched image; and a display unit configured to display the stitched image.

The image stitching method and system have been described hereinabove in details. The above embodiments have been described in a progressive manner, and the same or similar contents in the embodiments have not been repeated, i.e., each embodiment has merely focused on the difference from the others. Especially, the device embodiments are substantially similar to the method embodiments, and thus have been described in a simple manner. It should be further appreciated that, a person skilled in the art may make further modifications and improvements without departing from the spirit of the present disclosure, and these modifications and improvements shall also fall within the scope of the present disclosure.

It should be further appreciated that, the units and algorithm steps described herein may be implemented as electronic hardware, computer software or both. In order to clearly explain the interchangeability of hardware and software, the general description about functions of the illustrative units and steps has been given. Whether these functions are implemented as software or hardware depends on a specific application and an entire system design constraint. The functions may be achieved in various ways with respect to a specific application, but the implementation shall not be construed as departing from the scope of the present disclosure.

The steps in the method or algorithm described herein may be directly included in hardware, a software module executed by a processor, or both. The software module may reside in a Random Access Memory (RAM), a flash memory, a Read-Only Memory (ROM), an Electrically Programmable ROM (EPROM), an Electrically Erasable PROM (EEPROM), a register, a hard disc, a mobile disc, a Compact Disc-ROM (CD-ROM), or any other storage medium known in the art.

## Claims

1. An image stitching method based on multiple Unmanned Aerial Vehicles (UAVs), comprising:
obtaining a plurality of groups of image compression bitstreams and a plurality of groups of metadata;
encapsulating the plurality of groups of metadata into predefined fields of the image compression bitstreams frame by frame in a time synchronization manner, and generating a plurality of full-motion video bitstreams comprising the metadata;
transmitting the plurality of full-motion video bitstreams to a receiving end through communication links;
parsing each full-motion video bitstream into image frames and the corresponding metadata, and calculating an overlapping relationship between the image frames in accordance with the metadata; and
generating a stitched image in accordance with the image frames and the overlapping relationship.

2. The image stitching method according to claim 1, wherein the parsing each full-motion video bitstream into the image frames and the corresponding metadata and calculating the overlapping relationship between the image frames in accordance with the metadata comprises:
parsing geographical location information comprised in the metadata and temporally synchronizing with the image frames each time the plurality of full-motion video bitstreams is parsed into image frames temporally synchronizing with each other, calculating geographical range overlapping data between different image frames, and generating the overlapping relationship; or
when the plurality of full-motion video bitstreams is parsed into a plurality of image frames, parsing geographical location information comprised in the metadata and temporally synchronizing with the image frames, calculating geographical range overlapping data between the image frames temporally synchronizing with each other, and generating the overlapping relationship.

3. The image stitching method according to claim 2, wherein the parsing each full-motion video bitstream into the image frames and the corresponding metadata and calculating the overlapping relationship between the image frames in accordance with the metadata further comprises:
when the plurality of full-motion video bitstreams is parsed into a plurality of image frames, parsing geographical location information comprised in the metadata and temporally synchronizing with the image frames, calculating geographical range overlapping data between the image frames in a same full-motion video bitstream, and generating the overlapping relationship.

4. The image stitching method according to claim 1, wherein the generating the stitched image in accordance with the plurality of image frames and the overlapping relationship comprises:
performing coordinate system unification on the plurality of image frames, and generating the stitched image in accordance with the overlapping relationship.

5. The image stitching method according to claim 1, wherein the obtaining the plurality of groups of image compression bitstreams and the plurality of groups of metadata comprises:
outputting a first control signal for collecting the image compression bitstreams and a second control signal for collecting the metadata through a same reference clock circuit, the first control signal and the second control signal having a same reference clock; and
obtaining the plurality of groups of image compression bitstreams and the plurality of groups of metadata comprising an absolute time in accordance with the first control signal and the second control signal.

6. The image stitching method according to claim 5, wherein the metadata at least comprises Global Navigation Satellite System (GNSS) positioning data.

7. The image stitching method according to claim 4, further comprising subjecting the image frame to visualization treatment,
wherein the visualization treatment comprises:
creating a corresponding first layer in accordance with each full-motion video bitstream;
when the overlapping relationship indicates that the image frames do not overlap with each other, generating the stitched image through updating the image frames participating in the calculation of the overlapping relationship on the first layer corresponding to the full-motion video bitstream to which the image frames belong; and
when the overlapping relationship indicates that the image frames overlap with each other, invoking the first layer corresponding to the full-motion video bitstream to which the image frames participating in the calculation of the overlapping relationship belongs as a second layer, performing orthorectification and photogrammetric coordinate system unification on the plurality of image frames, generating the stitched image in accordance with the overlapping relationship, and updating the stitched image on the second layer.

8. The image stitching method according to claim 7, wherein an updating frequency is configured to be the same as a frame rate of the full-motion video bitstream.

9. An image stitching system based on multiple UAVs, comprising:
a transmitting end configured to obtain a plurality of groups of image compression bitstreams and a plurality of groups of metadata, encapsulate the plurality of groups of metadata into predefined fields of the image compression bitstreams frame by frame in a time synchronization manner, generate a plurality of full-motion video bitstreams comprising the metadata, and transmit the plurality of full-motion video bitstreams to a receiving end through communication links; and
the receiving end configured to parse each full-motion video bitstream into image frames and the corresponding metadata, calculate an overlapping relationship between the image frames in accordance with the metadata, and generate a stitched image in accordance with the image frames and the overlapping relationship.

10. The image stitching system according to claim 9, wherein the receiving end comprises:
a determination unit configured to select a plurality of pairs of image frames to be stitched;
a positioning unit configured to calculate the overlapping relationship between the image frames;
a stitching unit configured to generate the stitched image; and
a display unit configured to display the stitched image.
